(19) Europäisches Patentamt
European Patent Office
Office européen des brevets

(11) **EP 2 498 557 A1**

(12) **EUROPEAN PATENT APPLICATION**

(43) Date of publication:
**12.09.2012 Bulletin 2012/37**

(51) Int Cl.:
*H04W 56/00* (2009.01)     *H04W 64/00* (2009.01)

(21) Application number: **11290117.8**

(22) Date of filing: **08.03.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Schaich, Frank**<br>**70469 Stuttgart (DE)**<br><br>(74) Representative: **2SPL Patentanwälte**<br>**Postfach 15 17 23**<br>**80050 München (DE)** |
| (71) Applicant: **Alcatel Lucent**<br>**75007 Paris (FR)** | <u>Remarks:</u><br>Amended claims in accordance with Rule 137(2) EPC. |

(54) **Apparatus and method for synchronising a mobile station with a base station**

(57)     Embodiments relate to a concept for performing a synchronization procedure between a mobile station transceiver (200) with a base station transceiver (400) of a mobile communications network. The mobile station transceiver apparatus comprises means (202) for determining an estimate (203) on a geographic location of the mobile transceiver apparatus (200), means (204) for acquiring information (205) on surrounding base stations of the mobile communications network, the surrounding base stations surrounding the estimated geographic location (203) of the mobile transceiver apparatus, and means (206) for synchronizing to the mobile communications network based on the estimate (203) of the geographic location of the mobile transceiver apparatus and based on the information (205) on the surrounding base stations. The information (205) on surrounding base stations is transmitted from at least one of the surrounding base stations during a synchronized connection between said base station and the mobile station.

Fig. 2

## Description

Embodiments of the present invention relate to mobile communication systems, and, in particular, to a concept for performing a synchronization procedure between a mobile station and a base station of a mobile communication network.

Background

In any digital communication system an output of a demodulator is sampled periodically in order to recover transmitted information. Since a propagation delay from a transmitter to a receiver is generally unknown at the receiver, symbol timing must be derived from the received signal in order to synchronously sample the output of a demodulator.

In mobile communication systems base stations serve a plurality of associated mobile stations or mobile terminals, respectively. Hence, there are in general two different communication links in a communication scenario between a base station and an associated mobile station. The communication link from a transmitting base station to a receiving mobile station is generally referred to as downlink or forward link. In contrary, the communication link from a transmitting mobile station to a receiving base station is commonly referred to as uplink or reverse link.

Today, mobile communication systems based on various underlying technologies are available. Second generation (2G) mobile communication systems, such as e.g. GSM/EDGE (Global System for Mobile Communications/Enhanced Data Rates for GSM Evolution), are based on a combined TDMA/FDMA (Time Division Multiple Access/Frequency Division Multiple Access) scheme. Third generation (3G) mobile communication systems, such as UMTS (Universal Mobile Telecommunications System) or CDMA2000 (IS-2000), are based on code division multiple access (CDMA) technology. Newer mobile communication technologies, such as e.g. WiMAX (Worldwide Interoperability for Microwave Access) or 3GPP Long Term Evolution (LTE), are based on orthogonal frequency division multiplexing (OFDM) technologies. LTE, e. g., uses OFDMA in the downlink and single carrier frequency division multiple access (SC-FDMA) in the uplink.

All these different mobile communication technologies commonly require downlink synchronization as well as uplink synchronization, wherein downlink synchronization shall be understood as a synchronization of the mobile receiver to the transmitted downlink signal with respect to frequency and timing, and wherein uplink synchronization shall be understood as the synchronization or time alignment of a plurality of mobile stations associated to the timing of a serving base station.

Although not limited thereto, embodiments of the present invention will be exemplified referring to OFDM-based mobile communication networks, like, e.g.,

WiMAX or LTE. OFDM is a multi-carrier modulation technology, which divides an available spectrum into multiple orthogonal subcarriers or sub-channels, each one being modulated by a rather low rate data stream. Because each sub-channel covers only a small fraction of the original bandwidth, frequency selective fading over the entire bandwidth is divided into flat fading for the individual sub channels. Thus, OFDM-based systems have become very attractive for mobile communication applications due to its inherent capability to eliminate frequency selective fading. In addition, there are several methods available for reducing inter-symbol-interference (ISI) and inter-carrier-interference (ICI).

Radio frame synchronization for both the downlink and the uplink, is one of the most critical processing functions that an OFDM based system has to accomplish in order to provide high quality performance. Frame synchronization problems arise when a receiver cannot estimate the exact starting position of the radio frame due various types of noise, fading, and/or interference.

When switched on, a mobile terminal or mobile station, also referred to as subscriber station (SS) in WiMAX or user equipment (UE) in LTE, needs to be synchronized in order to successfully enter the mobile communication network. For this reason, the first action for a mobile terminal to be performed upon power-on is the so-called cell search comprising synchronization to the timing of a received downlink signal. In LTE the cell search procedure is based on the use of synchronization signals. Similar to WCDMA (Wideband CDMA), there are primary secondary synchronization signals (PSS) and secondary synchronization signals (SSS). In LTE, the PSS and SSS jointly point a space of 504 unique physical-layer cell identities (PCI), wherein the PCIs form 168 PCI groups, each of them having three PCIs. During the cell search process the mobile terminal looks for the PSS at possible center frequencies at the frequency band in question. There exist three different possibilities for the PSS. Once the PSS has been detected, the mobile terminal (UE) looks for the secondary synchronization signal. Once one alternative of 168 possible secondary synchronization signals is detected, the mobile terminal has figured out the PCI value from the address space of 504 possible PCIs. From the detected PCI the mobile terminal has information about the parameters used for downlink reference signals and thus the mobile terminal may decode the so-called physical broadcast channel (PBCH) comprising system information needed to access the mobile communication system, such as parameters for random, i.e. unsynchronized, access in the uplink.

A random access channel (RACH) typically is a contention-based channel for initial uplink transmission, i.e., from mobile station to base station. This channel may be used for several purposes. The RACH function is different depending on the technology of the system. The RACH may be used to access the network, to request resources, to carry control information, to adjust a timing-offset for the uplink, to adjust an uplink transmit power, etc. It may even be used to transmit small amounts of data. Contention resolution is the key feature of the random access channel. Many mobile stations may attempt to access the same base station simultaneously, leading to collisions.

At an (OFDMA) base station receiver, where multiple uplink signals corresponding to different mobile stations may arrive at the same time, non-synchronized mobile stations will interfere with each other and the base station will not be able to recover the individual signal of each mobile station. Hence, for OFDMA to work properly, all uplink signals should arrive at the base station at the same time with a considerably high timing accuracy. This may be achieved if all uplink signals are synchronized with the base station before the communication link is established. For this purpose the round-trip delay between a mobile terminal and the base station has to be known to the mobile terminal before establishing the uplink communication.

Although the mobile terminal synchronizes to the received downlink signal before transmitting on the random access channel (RACH), it cannot determine its distance from the base station. Thus, timing uncertainty caused by two-way propagation delay remains on RACH transmissions. Hence, a timing control procedure is performed so that uplink transmission from different users arrive at the base station (eNodeB in LTE) essentially within a certain timing window corresponding to the cyclic prefix. Such uplink synchronization is needed to avoid interference between the users with uplink transmissions scheduled on the same sub-frame. For this reason the base station continuously measures the timing of the uplink signals and adjusts the uplink transmission timing. The propagation delay estimation carried out by the base station is used by the mobile station to synchronize its uplink signal such that it arrives at the base station in its designated time interval. The timing control procedure in which this delay is estimated is called "initial ranging" for WiMAX or "timing advance" for LTE and it is mandated for all mobile terminals that decide to synchronize to the communication network. In the sequel, the terms "initial ranging" or "timing advance" will be used interchangeably.

State-of-the-art procedures for downlink synchronization as well as for uplink synchronization are time-consuming and computationally expensive. Hence, it would be desirable to have improved synchronization procedures for mobile communication systems.

Summary

Embodiments may be based on the finding that an initial synchronization procedure of a mobile station to synchronize with a mobile communication network may be made faster and/or more efficient when taking, at a start-up or power-on of the mobile station, geographical location data, like, e.g. GPS (Global Positioning System) data, of both a mobile station and a surrounding or neighboring base station, possibly in the vicinity of the mobile station, into account.

Therefore, an embodiment provides a mobile station transceiver apparatus being adapted for performing a synchronization procedure with a base station transceiver of a mobile communication network. The mobile station transceiver apparatus comprises estimator means for determining an estimate on a geographic location of the mobile transceiver apparatus, receiver means for receiving or acquiring information on surrounding base stations of the mobile communications network, the surrounding base stations surrounding the estimated geographic location of the mobile transceiver apparatus, and synchronization means for synchronizing to the mobile communications network based on the estimate of the geographic location of the mobile transceiver apparatus and based on the information on the surrounding base stations. Thereby the surrounding base stations surround the estimated geographic location of the mobile transceiver apparatus within a certain limited geographical range. Typically, the surrounding base stations may be base stations serving cells adjacent to the cell the mobile station transceiver apparatus was lastly associated with.

A mobile station comprising the above mobile station transceiver apparatus, which may be deployed in or coupled with the mobile station, may more efficiently and/or faster synchronize to a communication network, as will be explained in more detail in the sequel of this specification. Embodiments may affect initial downlink (frame) synchronization procedures as well as uplink synchronization or ranging procedures for a digital mobile communication system.

In order to provide the mobile station transceiver apparatus with the information on possibly surrounding or neighboring base stations, embodiments also provide a base station transceiver apparatus being adapted for performing a synchronization procedure with a mobile station transceiver of a mobile communication network. The base station transceiver apparatus comprises means for transmitting, during a synchronized connection with the mobile station transceiver, i.e. in a synchronized mode, information for identifying the base station transceiver apparatus to the mobile station transceiver, the information comprising information on a geographic location of the base station transceiver apparatus. In other words, the base station transceiver apparatus may be adapted to transmit at least its own geographic location or position, e.g. in form of GPS data, to the mobile station. According to some embodiments the base station transceiver apparatus may also be adapted to further transmit information indicating a geographic location of at least one base station transceiver being located geographically adjacent or neighboring to the (serving) base station transceiver apparatus. Thereby adjacent or neighboring shall be understood as adjacent or neighboring within a limited geographical range. Typically, adjacent or neighboring base stations serve adjacent or neighboring cells.

The synchronized connection with the mobile station transceiver refers to a last synchronized connection before the mobile station transceiver was switched off. I.e., during a synchronized communication link, a base station may transmit its own position and, additionally, positions of neighboring base stations, which it may have obtained via a communication interface to the neighboring base stations. For LTE the X2-interface between neighboring base stations could e.g. be employed for this purpose.

On the mobile terminal's end, embodiments of the mobile station transceiver apparatus may be correspondingly adapted to receive the transmitted geographic location information of its surrounding base stations during a synchronized mode, in which the mobile station transceiver apparatus is synchronized to the mobile communication network, and to store the received geographic location information in a memory comprising a dedicated location information database. I. e., during normal or synchronized operation the mobile station may e.g. receive GPS data from one or more nearby base stations and store this location related data of the base stations in its memory, which may be located on a memory card, a SIM card, on-board, etc.

According to further embodiments, in particular relating to an initial downlink or frame synchronization procedure, a base station transceiver apparatus may be also adapted to further transmit downlink synchronization signal information of the base station transceiver apparatus to the mobile station. This downlink synchronization signal information may, e.g., be related to base station specific primary and/or secondary synchronization signals (for LTE) or synchronization preambles (for WiMAX). Some embodiments provide a base station transceiver apparatus which is adapted to additionally transmit downlink synchronization signal information of at least one base station transceiver being located geographically adjacent or neighboring to the base station transceiver apparatus. I.e., during a synchronized communication link to a mobile station a base station may transmit its own downlink synchronization signal information and, additionally, downlink synchronization signal information of neighboring base stations, which it may have obtained via a communication interface between the neighboring base stations. For LTE the X2-interface between neighboring base stations could e.g. be employed for this purpose.

Correspondingly, embodiments of the mobile station transceiver apparatus may be further adapted to receive said downlink synchronization signal information of at least one surrounding or neighboring base station during the synchronized mode and to additionally store the received synchronization signal information (linked to the location information) in the location information database. I. e., during normal operation the mobile station may receive synchronization sequence or code data related to one or more nearby base stations and store the synchronization code data linked to the respective location data of the base stations in its memory or database.

This database may be accessed before or during an initial synchronization procedure of the mobile station, which typically has to be performed to synchronize to the mobile communication network after a power-on of the mobile station. Hence, with respect to an improved downlink frame synchronization, the mobile station transceiver apparatus may be further configured to access said memory or database before or during the frame synchronization procedure to obtain, based on the estimate of the geographic location of the mobile transceiver apparatus, the stored downlink synchronization signal information of at least one base station potentially located in reach of the mobile station transceiver.

Embodiments of the mobile station transceiver apparatus may then be adapted to use the obtained downlink synchronization signal information of the at least one nearest base station for an initial cell search or frame synchronization procedure.

This may provide the advantage that, after a power-on of the mobile station, and provided that the mobile's position has not significantly changed since its last power-off, a number of possible downlink synchronization signals (synchronization sequences) to be checked may be significantly reduced from a maximum available number to a smaller number corresponding to a number of neighboring cells or base stations in question. This may lead to a more effective and faster initial downlink cell search or synchronization procedure for modem mobile communication systems.

According to some embodiments, in particular relating to improved uplink synchronization or ranging procedures, the mobile station transceiver apparatus may be configured to provide, based on the determined estimate of its own geographic location and based on the stored geographic location information of the surrounding base stations, an estimate for a distance between a nearest or closest base station and the mobile station transceiver apparatus.

The mobile station transceiver apparatus may be configured to transmit, based on the estimated distance or based on a signal derived thereof, uplink synchronization information related to a random access or ranging procedure to the nearest surrounding base station. For this purpose the means for synchronizing may be adapted to determine, based on the estimated distance, path loss information and/or a propagation or round-trip delay information. E.g., an initial uplink transmit power used for the random access or ranging procedure of the mobile station may be chosen based on an estimated path loss. Propagation delay information transmitted from the mobile to the base station during random access procedure may be advantageously used by the base station to more effectively scan for ranging codes or preambles transmitted via the random access message.

Embodiments may also comprise a mobile communication system with at least one mobile station transceiver apparatus and at least one base station transceiver apparatus according to embodiments, respectively.

Related to embodiments of the mobile station transceiver apparatus, other embodiments may further provide a method for performing a synchronization procedure of the mobile station with a base station of a mobile communication network, the method comprising a step of determining an estimate on a geographic location of the mobile station, a step of acquiring information on surrounding base stations of the mobile communications network, the surrounding base stations surrounding the estimated geographic location of the mobile transceiver apparatus, and a step of synchronizing with the mobile communications network based on the estimate of the geographic location of the mobile station and based on the information on the surrounding base stations.

With respect to embodiments of the base station transceiver apparatus, other embodiments may also provide a method for aiding or enabling a synchronization procedure of a mobile station with a base station, the method comprising transmitting, during a synchronized connection with the mobile station transceiver, information for identifying the base station to the mobile station, the information comprising information on a geographic location of the base station.

Moreover, embodiments may comprise a computer program having a program code for performing one of the above methods when the computer program is executed on a computer or processor.

Here and in the remainder, information can typically be exchanged using signaling. Exchanging a signal may comprise writing to and/or reading from a memory, transmitting the signal electronically, optically, or by any other appropriate means.

With the help of its own geographic position, an embodiment of a mobile station may obtain a priori knowledge about synchronization sequences used by base stations in its neighborhood. This may significantly reduce a complexity of initial frame detection since not all possible synchronization sequences have to be checked after power-on if the mobile has not been moved significantly.

Further, if a mobile station has knowledge about the geographic location of a base station it needs to synchronize with, the distance to the base station may be calculated with the help of the mobile stations own known geographic position. Then, the round-trip-delay and the path loss may be approximated and then be used to significantly speed up a ranging or uplink synchronization procedure, as rather precise starting values for an initial random access uplink power and the propagation delay are available.

Brief description of the Figures

Some embodiments of apparatuses and/or methods will be described in the following by way of example only, and with reference to the accompanying figures, in which

Fig. 1 shows a conventional initial ranging procedure;

Fig. 2 shows an embodiment of a mobile station transceiver apparatus;

Fig. 3 shows an embodiment of a synchronization method performed by a mobile station transceiver apparatus;

Fig. 4 shows an embodiment of a base station transceiver apparatus;

Fig. 5 shows an embodiment of a method performed by a base station transceiver appa-ratus; and

Fig. 6 shows an embodiment of an uplink synchronization method performed by a mo-bile station transceiver apparatus according to an embodiment.

Description of Embodiments

An illustrative description of the embodiments will be given in details combined with the appended figures. For the ease of understanding, some conventional technical terms are explained first:

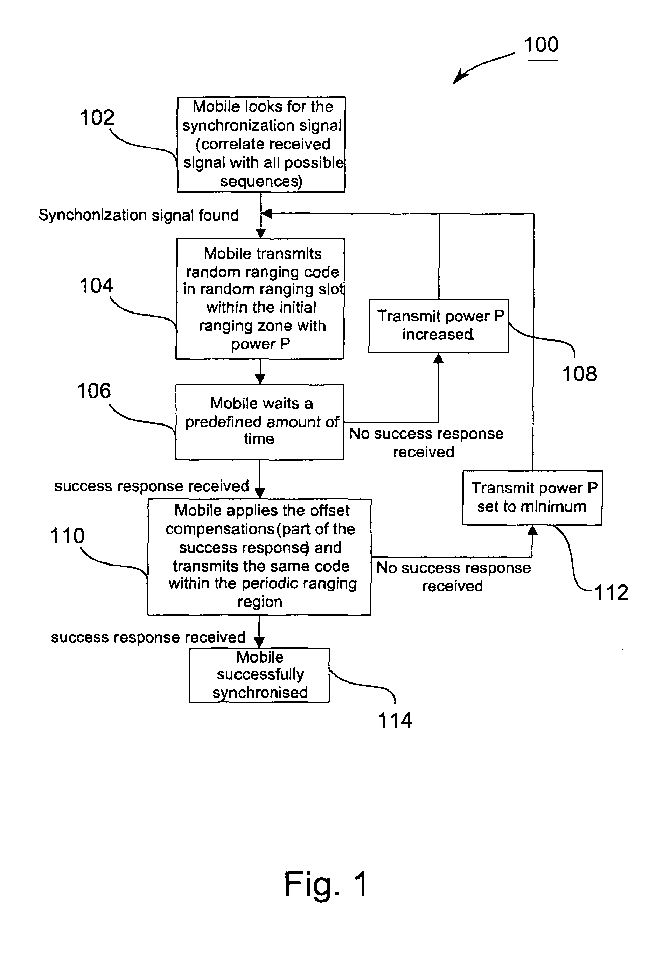

Fig. 1 shows a conventional initial ranging procedure 100, which may be performed in a conventional mobile communication system. Only for exemplary purposes an OFDM based system will be considered. Embodiments are, however, not limited to OFDM or OFDMA based systems, like, e.g. WiMAX or LTE, but may also be employed to other mobile communication systems where initial downlink and/or uplink synchronization is required.

When switched on, a mobile station needs to be synchronized to successfully enter a cellular communication network. During the synchronization procedure other users should be disturbed to the least possible amount, respectively. After an initial synchronization also a periodic synchronization (periodic ranging) is required due to movements of the mobile station.

A first step 102, which a mobile station has to perform upon power-on, is the so-called cell search including synchronization to the timing of a received downlink signal. The cell search procedure is commonly based on the use of synchronization signals or sequences. For example, there may be primary and/or secondary synchronization sequences, which may jointly point at an address space for identifying individual cells or base stations in the communication network. For example, in LTE the primary and secondary synchronization signals point at a space of $N = 504$ unique physical-layer cell identities (PCI), wherein the N = 504 PCIs form 168 PCI groups, each of them including three PCIs. During the cell search step 102, the mobile station may first look for the primary synchronization signal at possible center frequencies. In LTE there exist three different possibilities for the primary synchronization sequence. Once the primary synchronization sequence has been detected, the mobile station may look for the secondary synchronization signal (e.g. LTE: 168 alternatives). Once one alternative of a secondary synchronization sequence has been detected, the mobile station may figure out the identification for the base station or the cell (PCI). As has been explained before, the number N of possible cell identities may be quite large, leading to a time-consuming and/or computational expensive initial downlink frame synchronization procedure 102. From the detected cell identity in step 102 the mobile station has information about parameters used for downlink reference signals and thus the mobile station may decode a so-called physical broadcast channel (PBCH) comprising system information needed to access the mobile communication system, such as parameters for uplink random access.

The following random access procedure comprises a step 104, wherein the mobile station transmits, within an initial ranging zone (base station correlation window) and with an initial uplink transmit power, random or pseudo-random RACH preambles (LTE-terminology) or ranging codes (WiMAX-terminology) in random or pseudo-random ranging slots. This initial uplink transmit power may thereby be a lowest predefined power defined within the standard for a mobile communication system.

Then the mobile station waits a predefined amount of time for a success response from the base station (step 106). If no success response is received, the mobile station may increase its uplink transmit power step-by-step up to a maximum allowed power (see step 108) and transmit the RACH ranging code or preamble sequence again. This iterative ranging procedure comprising the steps 104, 106 and 108 may be repeated until the base station could successfully detect the random access message of the mobile station and, hence, measure a timing-offset of the mobile station's transmission with respect to base station's frame boundaries.

After having received a success message, including timing offset compensation values and a periodic ranging allocation, the mobile station may transmit the RACH ranging code or preamble sequence once again within the periodic ranging zone, and applying offset compensations instructed by the base station (see step 110). Then, if the base station could successfully detect the latter RACH message again, a success message may be transmitted from the base station to the mobile station. If this, however, exceeds a predefined time, the mobile goes back to initial ranging mode starting the ranging or random access procedure from the beginning (see step 112). However, if the success message arrives in time the mobile station is successfully synchronized to the mobile communication system (see step 114).

Unfortunately, the conventional initial downlink (step 102) and uplink synchronization procedures (steps 104-112) depicted in Fig. 1 have some disadvantages. Before even being able to start the random access procedure with step 104, the mobile station has to detect the synchronization signals of the base station for downlink frame synchronization first (cf. step 102). However, as it has no a priori knowledge about the synchronization sequences the base station uses, it has to correlate the received signal with all N possible synchronization sequences. As has been explained before, for LTE this may amount up to N = 504 possible synchronization sequences. In other mobile communication systems the situation may be even worse.

The subsequent uplink synchronization procedure (steps 104-112) using random access may last for several cycles, leading to a high latency. The longer the initial random access or ranging lasts, the higher is the number of mobile stations concurrently using the initial ranging zones. So, to ensure a low congestion probability the ranging zone (correlation window at the base station) should be big enough. The longer the mobile station has to stay within the ranging procedure in average, the bigger the ranging zone has to be not to exceed a targeted congestion probability.

Embodiments provide a possibility to improve the complexity and/or the time consumption for the above-explained initial downlink and/or uplink synchronization procedures after a mobile station is switched on. Embodiments propose to provide a mobile station with knowledge about its own geographical location as well as the geographical locations of at least one neighboring base station. In case the mobile station has knowledge about the geographical location of the base station, the distance to said base station may be calculated with the help of the mobile's own position. Then the propagation delay and the path loss may be approximated and be used to significantly speed up the random access or ranging or timing advance procedure, as rather precise starting values for uplink transmit power and propagation delay are available. Additionally, the mobile station may be provided with a priori knowledge about the synchronization sequences used by the base stations in its neighborhood. This may significantly reduce a complexity of the downlink frame synchronization procedure since not all possible synchronization sequences have to be checked.

Embodiments provide a mobile station transceiver apparatus, a base station transceiver apparatus and a mobile communication system comprising both the mobile station transceiver apparatus and the base station transceiver apparatus. Further, methods are provided, which may be carried out by the mobile station transceiver apparatus and/or the base station transceiver apparatus. According to further aspects, embodiments of computer programs are provided for carrying out the respective methods.

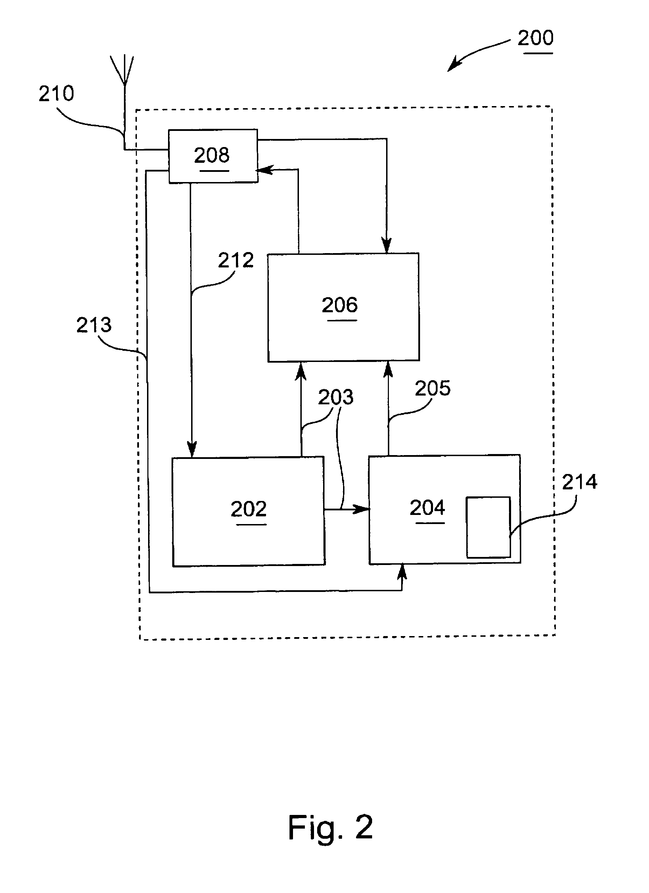

Turning now to Fig. 2, a schematic block diagram of an embodiment of a mobile station transceiver apparatus 200 will be explained in more detail.

The mobile station transceiver apparatus 200 is adapted for performing a synchronization procedure with a base station transceiver of a mobile communication network. The mobile station transceiver apparatus 200 comprises estimator means 202 for determining an estimate 203 on a geographic location of the mobile station transceiver apparatus 200. Further, it comprises receiver means 204 for acquiring or obtaining information 205 on surrounding base stations of the mobile communications network, the surrounding base stations surrounding the estimated geographic location 203 of the mobile transceiver apparatus 200. According to embodiments, the information 205 may comprise information on a geographic location of the surrounding or adjacent base stations, respectively. A synchronization means 206 is provided for synchronizing the mobile station transceiver apparatus 200 to the mobile communications network based on the estimate 203 of the geographic location of the mobile transceiver apparatus 200 and based on the information 205 on the surrounding or adjacent base stations.

The means 206 for synchronizing may be used for downlink as well as for uplink synchronization procedures. For this reason, the synchronization means 206 may be coupled to a transceiver (= transmitter + receiver) means 208 of the mobile station transceiver apparatus 200. The transceiver means 208 may comprise circuitry for receiving and demodulating downlink signals, as well as for modulating and transmitting uplink signals. For transmission and/or reception purposes the transceiver means 208 may be coupled to an antenna means 210. Thereby, the antenna means 210 may be adapted to receive and/or to transmit signals in a plurality of frequency bands. Hence, antenna means 210 may be used for reception of downlink signals in a downlink frequency band and for transmission of uplink signals in a (different) uplink frequency band. Additionally, antenna means 210 may be adapted to receive location or navigational data 212 of a navigational system, like, e.g., the Global Positioning System (GPS). The location or navigational data 212 may thereby be received via a communication link to at least one GPS-satellite. Such location or navigational data 212 may be used to determine the estimate 203 on the geographic location of the mobile station transceiver apparatus 200.

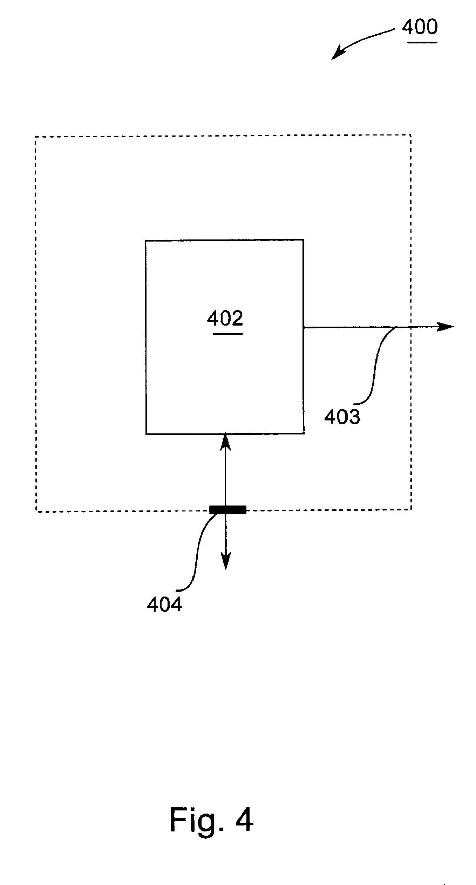

According to embodiments, the means 204 for acquiring the information 205 may be adapted to receive geographic location information of at least one of the surrounding base stations during a synchronized mode, in which the mobile station transceiver apparatus 200 is synchronized to the mobile communications network, i.e. to a serving base station, and to store the received geographic location information in a location database 214. For the purpose of reception of the geographic location information of surrounding base stations, means 204 may be coupled to the transceiver means 208, as indicated by reference numeral 213. I.e., the mobile station transceiver apparatus 200 may receive location information, e.g. comprising GPS data of an associated base station transceiver, from said base station transceiver, which is schematically illustrated in Fig. 4.

Embodiments may also provide a base station transceiver apparatus 400 being adapted for performing a synchronization procedure with a mobile station transceiver 200 of a mobile communication network. According to embodiments the base station transceiver apparatus 400 comprises transmitter means 402 for transmitting, during a synchronized connection with the mobile station transceiver, i.e. in a synchronized mode, information 403 for identifying the base station transceiver apparatus 400 to the mobile station transceiver 200, wherein the information 403 comprises information on a geographic location of the base station transceiver 400. The synchronized connection, during which the information 403 is transmitted from the base station to the mobile station, may be a synchronized connection between base and mobile station before the mobile station is switched off and/or switched on again, i.e. a synchronized connection before a newly necessary synchronization procedure after power-on of the mobile.

Thereby the transmitter means 402 may be adapted to only transmit the geographic location data related to the base station transceiver apparatus 400. However, advantageously the transmitter means 402 may be adapted to also transmit information indicating the geographic location of at least one further base station transceiver being located geographically adjacent or neighboring to the base station transceiver apparatus 400. For this reason the base station transceiver apparatus 400 may also comprise an interface 404 to couple the base station transceiver apparatus 400 to at least one neighboring or adjacent cell or base station. In LTE the interface 404 may e.g. be the so-called X2-interface for inter-eNodeB communications.

The information 403 on the geographic locations of the base station transceiver apparatus 400 and its neighboring base stations may be used by the mobile station transceiver apparatus 200, together with the estimate 203 of its own geographic position, for more efficient and/or faster synchronization procedures, as will be explained in more detail further below.

Some embodiments may be used to improve an initial downlink (frame) synchronization procedure. Therefore, in some embodiments of the base station transceiver apparatus 400, the means 402 for transmitting may also be adapted to further transmit, to the mobile station transceiver apparatus 200, downlink synchronization signal information of the base station transceiver apparatus 400. Such downlink synchronization signal information may comprise information about a synchronization sequence used by the base station transceiver apparatus 400. In the context of LTE, such information would e.g. comprise information on the primary and secondary synchronization sequence used by the base station transceiver apparatus 400.

The inter-base-station interface 404 may be also used to obtain the described downlink synchronization signal information of adjacent or neighboring base stations. Such downlink synchronization signal information of neighboring base stations may then be also transmitted, via the means 402 for transmitting, to the mobile station transceiver apparatus 200. In other words the means 402 for transmitting may be adapted to further transmit downlink synchronization signal information of at least one base station transceiver being located geographically adjacent to the base station transceiver apparatus 400.

Correspondingly, turning back to the mobile station transceiver apparatus 200, the means 204 for acquiring the information 205 may be further adapted to receive, during the synchronized mode before a power-off, downlink synchronization signal information of an associated base station transceiver apparatus 400 and, additionally, of further surrounding or adjacent base stations. Such received synchronization signal information may be linked or associated to corresponding location information and stored in the location database 214.

According to embodiments, the location database 214 may comprise a lookup-table (LUT) for looking up, after power-on of the mobile and before a synchronization procedure, the information 205 on surrounding base stations comprising position or location data and/or downlink synchronization signal information of base stations that had been adjacent to or neighboring the mobile station transceiver apparatus 200 before it was switched off. The database 214 may be stored in an on-chip memory of the mobile station transceiver apparatus 400 or, alternatively, in an off-chip memory, like, e.g., a memory card.

While the database 214 may be filled with information during a synchronized communication link between the mobile station transceiver 200 and its serving base station transceiver 400, it may actually be only used after a power-on of the mobile station transceiver apparatus 200 before starting downlink and/or uplink synchronization procedures for entering the network. For this purpose the means 204 for acquiring the information 205 may be adapted to access the location database 214 before or during an uplink and/or downlink synchronization procedure to obtain, based on the estimate 203 of the geographic location of the mobile station transceiver apparatus 200, downlink synchronization signal information of at least one base station located close or nearest to the mobile station transceiver apparatus 200. Hence, after a power-on, the estimated geographic position 203 of the mobile station transceiver apparatus 200 may be firstly determined by estimator means 202, which may e.g. comprise a GPS navigation device. The determined estimate 203 of the mobile station's position may then be used to find out locations of base stations closely located to the newly switched-on mobile station by looking in the database 214. Such closely located base stations will of course only be found if the mobile station transceiver apparatus 200 has not been moved to far away from its last geographic position before it was powered off. If this, however, was the case, the mobile transceiver apparatus 200 would have to perform conventional downlink frame synchronization procedures.

In case relevant base stations, which are located close enough to the mobile station's 200 own geographic position, may be found in the database 214 their associated downlink signal synchronization signal information may be used for a more efficient cell search procedure. In this case it is not necessary to search a complete cell ID address space, but to only use the limited amount of stored synchronization signals used by the nearest base stations. In an LTE scenario, e.g., instead of performing a correlation with 504 possible synchronization sequences, an improved cell search procedure using e.g. only five synchronization sequences of neighboring cells is possible, thereby saving time and processing power. Hence, the means 206 for synchronizing may be adapted to use the obtained and stored downlink synchronization signal information of the at least one nearest base station for a complexity-reduced initial cell search or frame synchronization procedure.

As mentioned before, some embodiments may also be employed for improving uplink synchronization or time alignment, which is done using the random access-, or ranging-, or timing advance procedures.

In some embodiments the means 206 for synchronizing may be adapted to determine an estimate for a distance between the base station, for which downlink synchronization has been performed before, and the mobile station transceiver apparatus 200. This distance may be estimated based on the estimate 203 of the mobile station's own geographic location 203 and based on the stored geographic location information 205 of the surrounding base stations. With the help of the mobile stations own geographic position 203 and the geographic locations stored in the database 214 of the mobile transceiver apparatus 200, it is possible to determine a line-of-sight distance d between the mobile station transceiver apparatus 200 and the base station transceiver apparatus 400 it wants to synchronize with.

This distance information may be used for an initial ranging or RACH procedure for uplink synchronization. I.e., the means 206 for synchronizing may be adapted to transmit, based on the estimated distance or a signal derived thereof, uplink synchronization information related to a ranging procedure to the nearest surrounding base station or the base station it wants to synchronize with. Conventionally, a mobile station starts an initial ranging process by sending a ranging request and a MAC (Media Access Control) message using a minimum specified transmission power. If no response is received from the base station, the mobile station resends the message on the subsequent frame using a higher transmission power. The base station response then either indicates uplink transmit power and timing corrections that the mobile station must make or indicates success.

According to embodiments such a conventional initial ranging or timing advance procedure may be improved. Therefore, the means 206 for synchronizing may be adapted to determine, based on the estimated distance, path loss information and/or propagation delay information, which may then be used for the initial ranging procedure. An estimate for the path loss may be based on a variety of radio wave propagation models. Such radio wave propagation models are, e.g., the free space propagation model, the ground reflection (2-ray) model, the log-distance path loss model, log-normal shadowing, the Hata model, etc. The preferred model may depend on the topography of the cell in question. A radio wave propagation model to be used by the mobile station for the path-loss estimation could e.g. also be transmitted or indicated from the base station to the mobile station together with the location information and the downlink synchronization signal information.

The free space propagation model may e.g. be used to predict received signal strength when a transmitter and a receiver have a clear, unobstructed line-of-sight (LOS) path between them. The path loss PL may be determined based on

$$PL(d) = -10\log\left(\frac{G_t G_r \lambda^2}{(4\pi)^2 d^2 L}\right),$$

wherein $G_t$ denotes a transmitter antenna gain, $G_r$ a receiver antenna gain, d is the distance, L denotes a system loss factor not related to propagation and $\lambda$ means the wavelength in meters. Hence, the free space propagation model may deliver a lower-bound path loss between the mobile station transceiver apparatus 200 and the associated base station transceiver apparatus 400.

In a mobile radio channel, a single direct path (LOS) between the base station and the mobile station is rarely the only physical means for propagation and, hence, the free space propagation model is in most cases inaccurate when used alone. The 2-ray ground reflection model may be a useful propagation model that is based on geometric optics, and considers both the direct path and a ground reflective propagation path between transmitter and receiver. Here, the path loss PL may be determined based on

$$PL(d) = -10\log\left(\frac{G_t G_r h_t^2 h_r^2}{d^4}\right),$$

wherein $G_t$ denotes the transmitter antenna gain, $G_r$ the receiver antenna gain, d is the distance, $h_t$ denotes the transmitter antenna height and $h_r$ denotes the receiver antenna height. This model has been found to be reasonably accurate for predicting the large-scale signal strength over distances of several kilometers for mobile radio systems that use tall towers, as well as for line-of-sight microcell channels in urban environments. Also other formulas based on other propagation models may be used.

Once an estimate for the path loss has been determined, an estimate for an initial uplink transmit power for the random access or ranging procedure may be determined based on a minimum required received power at the base station and based on the estimated path loss. In the case of a small path loss, the initial uplink transmit power may, hence, be chosen smaller compared to situations where a heavy or strong path loss is estimated. Particularly in the latter case embodiments may provide an improvement with respect to time consumption needed for the ranging or RACH procedure, since fewer iterations are necessary until the base station initially "hears" the mobile station.

Furthermore, in addition to the estimate for the distance between the mobile station and the base station also an estimate for a propagation or round-trip delay may be determined by means 206. E.g., the formula t = d/c (c = speed of light) may be used for this purpose. Based on such a propagation delay estimate, the mobile station transceiver apparatus 200 may adjust its uplink transmission timing with respect to the frame boundaries of the received downlink signal such that a correlation window (ranging zone) needed at the base station in order to find the RACH preamble sequences or ranging codes may be reduced. This, in return, may again lead to less computational complexity and, hence, also to a reduced duration of the uplink synchronization procedure.

As mentioned before, embodiments may also provide methods, which may be performed either by the mobile station transceiver apparatus 200 or the base station transceiver apparatus 400.

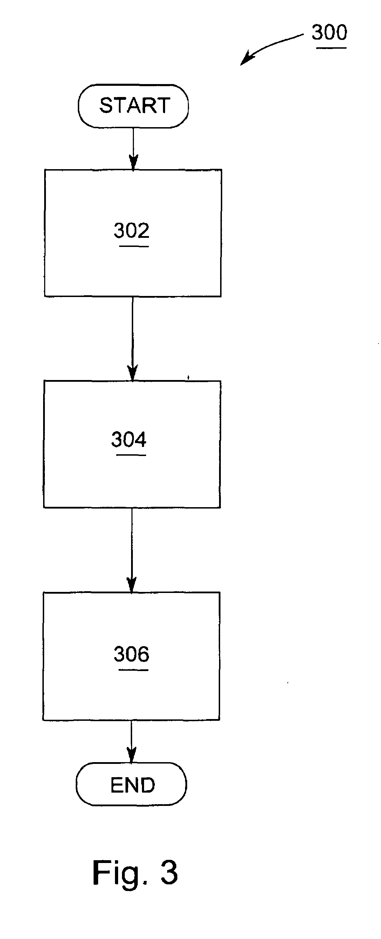

A method 300 related to the mobile station transceiver apparatus 200 is schematically depicted in the flow chart of Fig. 3. Fig. 3 shows a method 300 for performing a synchronization procedure for a mobile station 200 with at least one base station 400 of a mobile communications network.

The method 300 comprises a step 302 of determining an estimate 203 on a geographic location of the mobile station transceiver apparatus 200. This step 302 is related to estimator means 202. In a further step 304, information 205 on surrounding base stations of the mobile communication network, the surrounding base stations surrounding the estimated geographic location of the mobile station, is acquired by means 204. In a step 306 the mobile station transceiver apparatus 200 is synchronized with the base station 400 based on the estimate 203 of the geographic location of the mobile station and based on the information 205 on the surrounding base stations. The step 306 may be performed by synchronization means 206.

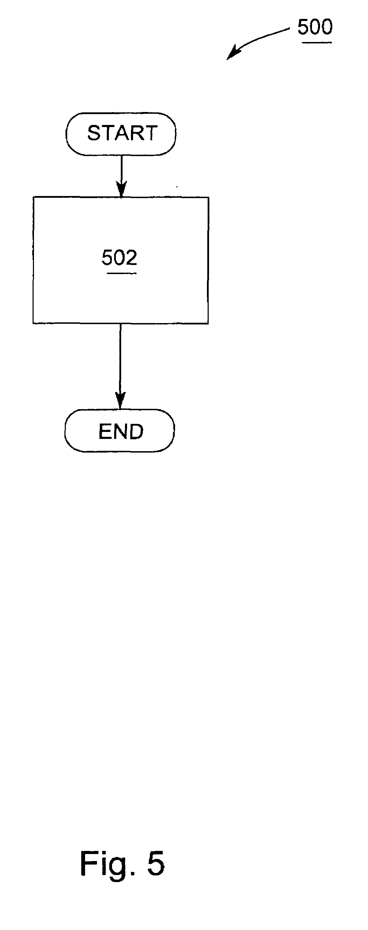

Fig. 5 indicates a method 500 for aiding or enabling a synchronization procedure of a mobile station transceiver apparatus 200 with a base station transceiver apparatus 400 of a mobile communications network after power-on of the mobile station transceiver apparatus 200.

The method 500 comprises a step 502 of transmitting, during a synchronized connection with the mobile station transceiver 200 before an execution of method 300, information 403 for identifying the base station transceiver apparatus 400 to the mobile station transceiver apparatus 200, the information 403 comprising information on a geographic location of the base station transceiver apparatus. Step 502 may thereby be performed by transmitter means 402.

As has been explained before, the method 500 may also comprise further steps, e.g., steps of transmitting synchronization signal information from the base station transceiver apparatus 400 to the mobile station transceiver apparatus 200.

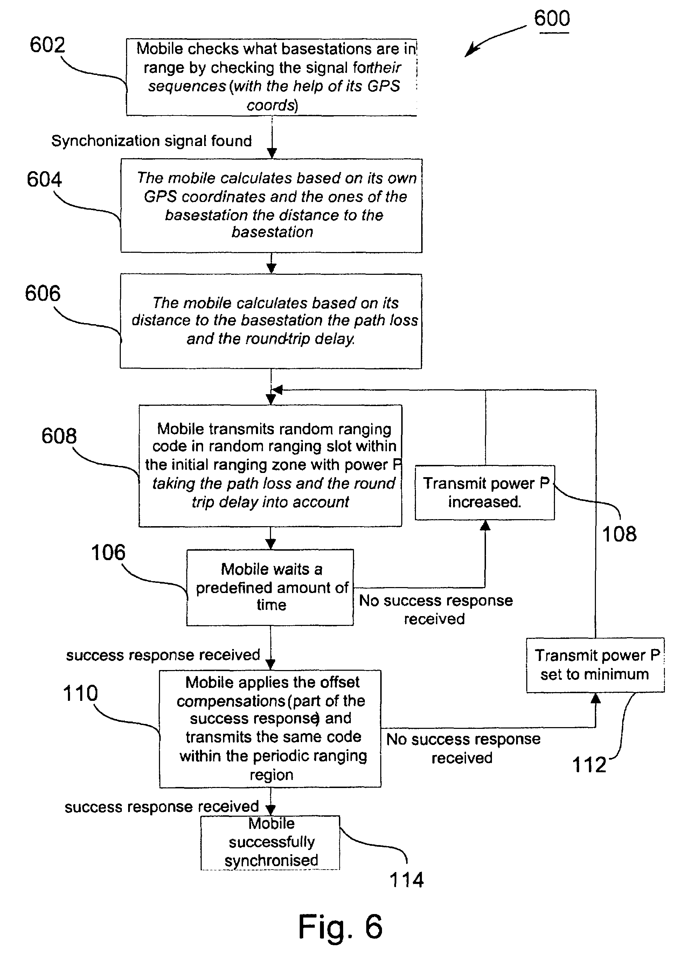

Turning now to Fig. 6, a flow chart of a synchronization procedure 600 according to an embodiment will be detailed. Fig. 6 shows an improved initial ranging procedure compared to Fig. 1.

In a first step 602 the mobile station 200 may apply an improved downlink synchronization procedure by only considering a relevant amount of downlink synchronization sequences. I.e., the mobile station may check - after its power-on - what base stations are in range by checking a received physical downlink synchronization channel for their respective synchronization sequences. In one embodiment this could be preferably done with the help of the mobile's own GPS coordinates (and with the help of stored locations of surrounding base stations), in particular if the database comprises a considerable amount of possible base stations. However, according to other embodiments, the mobile's own GPS coordinates are not by all means necessary for this step. In case the database only comprises downlink synchronization signal information of a few base stations that were close to the mobile station before its last switch-off, the mobile station could also scan for the respective downlink synchronization signals corresponding to those last nearby base stations without necessarily using its own location.

For a subsequent uplink synchronization or ranging procedure the mobile station 200 may calculate, based on its own GPS coordinates and the ones of the intended base station to be synchronized with, the distance to said base station (step 604). Further, in a subsequent step 606, the mobile station 200 may calculate, based on its distance to the base station, the path loss and the round-trip or propagation delay. Subsequently, the mobile station 200 may transmit a random ranging code, for example a Zadoff-Chu sequence, in a random ranging slot within an initial ranging zone and with an initial uplink transmit power, thereby taking the determined path loss and/or round-trip delay into account (step 608). Due to the consideration of the path loss and the round-trip delay in step 608, more adequate starting values for the initial uplink transmit power and the timing offsets (ranging zone) may be obtained, leading to a reduction of the uplink synchronization latency due to a smaller amount of iteration loops.

To summarize, embodiments could address two possible scenarios after a power-on of a mobile station:

　In a first scenario, a mobile could try to synchronize to a network in a geographical area where it has never done so before. Then the mobile station has no knowledge about the GPS coordinates of any surrounding base stations. In this case, state-of-the-art synchronization procedures may be used. Then, once the mobile station has successfully synchronized to the mobile communication network, its serving base station may send its GPS coordinates, and additionally the ones of nearby base stations, to the mobile station.

　Additionally, the base station may transmit parameters needed to identify the base station, e.g. a cell ID and/or a segment number for WiMAX, the physical cell ID for LTE.

　In an alternate embodiment, this information, i.e. the GPS coordinates and the additional parameters, could be broadcasted by the surrounding base stations in regular intervals.

In a second scenario the mobile could try to synchronize to a network in a geographic area where it has done so already and the past. Then it has the GPS coordinates and the identification parameters of the surrounding base stations available (in the database 214). These may be used to simplify the synchronization procedures significantly. On the one hand the number of downlink synchronization signals to be checked (WiMAX: preambles, LTE: the primary synchronization signals and secondary synchronization signals) may be significantly reduced. On the other hand, the mobile may calculate the distance to the nearest base station and take the corresponding path loss and round-trip delay into account when transmitting the ranging codes in uplink random access messages. This way the overall number of necessary ranging code transmissions may significantly be reduced, in particular for far away mobile stations.

Embodiments may lead to much faster synchronization procedures, in turn leading to lower synchronization latencies. Smaller ranging zones may become possible, hence, freeing space for data transport and thus increasing the system throughput. Alternatively the ranging zones could be kept in size reducing a congestion probability. Periodic ranging procedures may similarly exploit the knowledge reducing the frequency of necessary resynchronization. Due to the reduced complexity of the ranging procedures, it is also possible to reduce a needed power consumed by the mobile station during the ranging processes.

Moreover, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machineexecutable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks labeled as "estimator means", "receiver means" or "synchronization means", etc., may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A mobile station transceiver apparatus (200) being adapted for performing a synchronization procedure with a base station transceiver (400) of a mobile communications network, the mobile station transceiver apparatus comprising:

   means (202) for determining an estimate (203) on a geographic location of the mobile transceiver apparatus (200);
   means (204) for acquiring information (205) on surrounding base stations of the mobile communications network, the surrounding base stations surrounding the estimated geographic location (203) of the mobile transceiver apparatus; and
   means (206) for synchronizing to the mobile communications network based on the estimate (203) of the geographic location of the mobile transceiver apparatus and based on the information (205) on the surrounding base stations.

2. The mobile station transceiver apparatus (200) according to claim 1, wherein the means (204) for acquiring the information (205) is adapted to receive geographic location information of at least one of the surrounding base stations during a synchronized mode, in which the mobile station transceiver apparatus (200) is synchronized to the mobile communications network and to store the received geographic location information in a location database (214).

3. The mobile station transceiver apparatus (200) according to claim 2, wherein the means (204) for acquiring the information is further adapted to receive downlink synchronization signal information of at least one of the surrounding base stations during the synchronized mode and to additionally store the received synchronization signal information in the location database (214).

4. The mobile station transceiver apparatus (200) according to claim 3, wherein the means (204) for acquiring the information is adapted to access the location database (214) before or during the synchronization procedure to obtain, based on the estimate (203) of the geographic location of the mobile transceiver apparatus (200), downlink synchronization signal information of at least one base station located nearest to the mobile station transceiver apparatus (200).

5. The mobile station transceiver apparatus (200) according to claim 4, wherein the means (206) for synchronizing is adapted to use the obtained downlink synchronization signal information of the at least one nearest base station for a initial cell search procedure with reduced complexity.

6. The mobile station transceiver apparatus (200) according to claim 2, wherein the means (206) for synchronizing is adapted to provide an estimate for a distance between at least one of the surrounding base stations and the mobile station transceiver apparatus (200) based on the estimate (203) of its geographic location and based on the stored geographical location information of the surrounding base stations.

7. The mobile station transceiver apparatus (200) according to claim 6, wherein the means (206) for synchronizing is adapted to transmit, based on the estimated distance or a signal derived thereof, uplink synchronization information related to a ranging procedure to one of the surrounding base stations.

8. The mobile station transceiver apparatus (200) according to claim 7, wherein the means (206) for synchronizing is adapted to determine, based on the estimated distance, a path loss information and/or a propagation delay information for use during the uplink synchronization information.

9. A base station transceiver apparatus (400) being adapted for performing a synchronization procedure with a mobile station transceiver (200) of a mobile communications network, the base station transceiver apparatus comprising:

   means (402) for transmitting, during a synchronized connection with the mobile station transceiver (200), information (403) for identifying the base station transceiver apparatus (400) to the mobile station transceiver (200), the information (403) comprising information on a geographic location of the base station transceiver apparatus (400).

10. The base station transceiver apparatus (400) according to claim 9, wherein the means (402) for transmitting is adapted to further transmit downlink synchronization signal information of the base station transceiver apparatus (400).

11. The base station transceiver apparatus (400) according to claim 9, wherein the means (402) for transmitting is adapted to further transmit information indicating geographic location of at least one base station transceiver being located geographically adjacent to the base station transceiver apparatus (400).

12. The base station transceiver apparatus (400) according to claim 11, wherein the means (402) for transmitting is adapted to further transmit downlink synchronization signal information of at least one base station transceiver being located geographically adjacent to the base station transceiver apparatus (400).

13. A method (300) for performing a synchronization procedure of a mobile station (200) with at a base station (400) of a mobile communications network, comprising:

   determining (302) an estimate on a geographic location of the mobile station;
   acquiring (304) information on base stations of the mobile communications network surrounding the estimated geographic location of the mobile station; and
   synchronizing (306) with the base station based on the estimate of the geographic location of the mobile station and based on the information on the surrounding base stations.

14. A method (500) for aiding a synchronization procedure of a mobile station (200) with a base station (400) of a mobile communications network, comprising:

   transmitting (502), during a synchronized connection with the mobile station (200), information for identifying the base station (400) to the mobile station (400), the information comprising information on a geographic location of the base station (400).

15. A computer program having a program code for performing the method of claims 13 or 14, when the computer program is executed on a computer or processor.

**Amended claims in accordance with Rule 137(2) EPC.**

1. A mobile station transceiver apparatus (200) being adapted for performing a synchronization procedure with a base station transceiver (400) of a mobile communications network, the mobile station transceiver apparatus comprising:

means (202) for determining an estimate (203) on a geographic location of the mobile transceiver apparatus (200);
means (204) for acquiring information (205) on surrounding base stations of the mobile communications network, the surrounding base stations surrounding the estimated geographic location (203) of the mobile transceiver apparatus, wherein the means (204) for acquiring the information (205) is adapted to receive geographic location information of at least one of the surrounding base stations during a synchronized mode, in which the mobile station transceiver apparatus (200) is synchronized to the mobile communications network and to store the received geographic location information in a location database (214), and to receive downlink synchronization signal information of at least one of the surrounding base stations during the synchronized mode and to additionally store the received synchronization signal information in the location database (214); and
means (206) for synchronizing to the mobile communications network based on the estimate (203) of the geographic location of the mobile transceiver apparatus and based on the information (205) on the surrounding base stations.

2. The mobile station transceiver apparatus (200) according to claim 1, wherein the means (204) for acquiring the information is adapted to access the location database (214) before or during the synchronization procedure to obtain, based on the estimate (203) of the geographic location of the mobile transceiver apparatus (200), downlink synchronization signal information of at least one base station located nearest to the mobile station transceiver apparatus (200).

3. The mobile station transceiver apparatus (200) according to claim 2, wherein the means (206) for synchronizing is adapted to use the obtained downlink synchronization signal information of the at least one nearest base station for a initial cell search procedure with reduced complexity.

4. The mobile station transceiver apparatus (200) according to claim 1, wherein the means (206) for synchronizing is adapted to provide an estimate for a distance between at least one of the surrounding base stations and the mobile station transceiver apparatus (200) based on the estimate (203) of its geographic location and based on the stored geographical location information of the surrounding base stations.

5. The mobile station transceiver apparatus (200) according to claim 4, wherein the means (206) for synchronizing is adapted to transmit, based on the estimated distance or a signal derived thereof, uplink synchronization information related to a ranging procedure to one of the surrounding base stations.

6. The mobile station transceiver apparatus (200) according to claim 5, wherein the means (206) for synchronizing is adapted to determine, based on the estimated distance, a path loss information and/or a propagation delay information for use during the uplink synchronization information.

7. A base station transceiver apparatus (400) being adapted for performing a synchronization procedure with a mobile station transceiver (200) of a mobile communications network, the base station transceiver apparatus comprising:

means (402) for transmitting, during a synchronized connection with the mobile station transceiver (200), information (403) for identifying the base station transceiver apparatus (400) to the mobile station transceiver (200), the information (403) comprising information on a geographic location of the base station transceiver apparatus (400), and wherein the means (402) for transmitting is adapted to further transmit downlink synchronization signal information of the base station transceiver apparatus (400).

8. The base station transceiver apparatus (400) according to claim 7, wherein the means (402) for transmitting is adapted to further transmit information indicating geographic location of at least one base station transceiver being located geographically adjacent to the base station transceiver apparatus (400).

9. The base station transceiver apparatus (400) according to claim 8, wherein the means (402) for transmitting is adapted to further transmit downlink synchronization signal information of at least one base station transceiver being located geographically adjacent to the base station transceiver apparatus (400).

10. A mobile station transceiver apparatus (200) being adapted for performing a synchronization procedure with a base station transceiver (400) of a mobile communications network, the mobile station transceiver apparatus comprising:

means (202) for determining an estimate (203) on a geographic location of the mobile transceiver apparatus (200);

means (204) for acquiring information (205) on surrounding base stations of the mobile communications network, the surrounding base stations surrounding the estimated geographic location (203) of the mobile transceiver apparatus, wherein

the means (204) for acquiring the information (205) is adapted to receive geographic location information of at least one of the surrounding base stations during a synchronized mode, in which the mobile station transceiver apparatus (200) is synchronized to the mobile communications network and to store the received geographic location information in a location database (214); and

means (206) for synchronizing to the mobile communications network based on the estimate (203) of the geographic location of the mobile transceiver apparatus and based on the information (205) on the surrounding base stations, wherein the means (206) for synchronizing is adapted to provide an estimate for a distance between at least one of the surrounding base stations and the mobile station transceiver apparatus (200) based on the estimate (203) of its geographic location and based on the stored geographical location information of the surrounding base stations, wherein the means (206) for synchronizing is adapted to transmit, based on the estimated distance or a signal derived thereof, uplink synchronization information related to a ranging procedure to one of the surrounding base stations, and wherein the means (206) for synchronizing is adapted to determine, based on the estimated distance, a path loss information for determining the uplink synchronization information.

**11.** The mobile station transceiver apparatus (200) according to claim 10, wherein an estimate for an initial uplink transmit power for the ranging procedure may be determined based on a minimum required received power at the base station and based on the estimated path loss information.

**12.** A method (300) for performing a synchronization procedure of a mobile station (200) with at a base station (400) of a mobile communications network, comprising:

determining (302) an estimate on a geographic location of the mobile station;
acquiring (304) information on base stations of the mobile communications network surrounding the estimated geographic location of the mobile station, wherein acquiring the information (205) comprises receiving geographic location information of at least one of the surrounding base stations during a synchronized mode, in which the mobile station transceiver apparatus (200) is synchronized to the mobile communications network and storing the received geographic location information in a location database (214), and wherein the acquiring further comprises receiving downlink synchronization signal information of at least one of the surrounding base stations during the synchronized mode and to additionally store the received synchronization signal information in the location database (214); and

synchronizing (306) with the base station based on the estimate of the geographic location of the mobile station and based on the information on the surrounding base stations.

**13.** A method (300) for performing a synchronization procedure of a mobile station (200) with at a base station (400) of a mobile communications network, comprising:

determining (302) an estimate on a geographic location of the mobile station;

acquiring (304) information on base stations of the mobile communications network surrounding the estimated geographic location of the mobile station, wherein acquiring the information (205) comprises receiving geographic location information of at least one of the surrounding base stations during a synchronized mode, in which the mobile station transceiver apparatus (200) is synchronized to the mobile communications network and storing the received geographic location information in a location database (214; and

synchronizing (306) with the base station based on the estimate of the geographic location of the mobile station and based on the information on the surrounding base stations, wherein the synchronizing comprises providing an estimate for a distance between at least one of the surrounding base stations and the mobile station transceiver apparatus (200) based on the estimate (203) of its geographic location and based on the stored geographical location information of the surrounding base stations, wherein the synchronizing comprises transmitting, based on the estimated distance or a signal derived thereof, uplink synchronization information related to a ranging procedure to one of the surrounding base stations, and wherein the synchronizing comprises determining, based on the estimated

27    **EP 2 498 557 A1**    28

distance, a path loss information for determining the uplink synchronization information.

**14.** A method (500) for aiding a synchronization procedure of a mobile station (200) with a base station (400) of a mobile communications network, comprising:

transmitting (502), during a synchronized connection with the mobile station (200), information for identifying the base station (400) to the mobile station (400), the information comprising information on a geographic location of the base station (400) and downlink synchronization signal information of the base station transceiver apparatus (400).

**15.** A computer program having a program code for performing the method of claims 12 to 14, when the computer program is executed on a computer or processor.

**15**

100

102 — Mobile looks for the synchronization signal (correlate received signal with all possible sequences)

Synchonization signal found

104 — Mobile transmits random ranging code in random ranging slot within the initial ranging zone with power P

Transmit power P increased

108

106 — Mobile waits a predefined amount of time

No success response received

success response received

110 — Mobile applies the offset compensations(part of the success response) and transmits the same code within the periodic ranging region

No success response received

Transmit power P set to minimum

112

success response received

Mobile successfully synchronised

114

# Fig. 1

Fig. 2

_300_

```
        ┌─────────┐
        │  START  │
        └─────────┘
             │
             ▼
     ┌───────────────┐
     │               │
     │      302      │
     │               │
     └───────────────┘
             │
             ▼
     ┌───────────────┐
     │               │
     │      304      │
     │               │
     └───────────────┘
             │
             ▼
     ┌───────────────┐
     │               │
     │      306      │
     │               │
     └───────────────┘
             │
             ▼
        ┌─────────┐
        │   END   │
        └─────────┘
```

# Fig. 3

400

402

403

404

Fig. 4

500

START

502

END

Fig. 5

600

**602** — Mobile checks what basestations are in range by checking the signal for *their* sequences (*with the help of its GPS coords*)

↓ Synchonization signal found

**604** — *The mobile calculates based on its own GPS coordinates and the ones of the basestation the distance to the basestation*

↓

**606** — *The mobile calculates based on its distance to the basestation the path loss and the round-trip delay.*

↓

**608** — Mobile transmits random ranging code in random ranging slot within the initial ranging zone with power P *taking the path loss and the round trip delay into account*

Transmit power P increased. — **108**

↓

**106** — Mobile waits a predefined amount of time

No success response received

↓ success response received

**110** — Mobile applies the offset compensations (part of the success response) and transmits the same code within the periodic ranging region

Transmit power P set to minimum

No success response received — **112**

↓ success response received

Mobile successfully synchronised — **114**

## Fig. 6

Europäisches
Patentamt

European
Patent Office

Office européen
des brevets

**EUROPEAN SEARCH REPORT**

Application Number

EP 11 29 0117

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | US 2005/053099 A1 (SPEAR STEPHEN L [US] ET AL) 10 March 2005 (2005-03-10)<br>* paragraph [0017] - paragraph [0024] *<br>* figures 2,3,4 * | 1-15 | INV.<br>H04W56/00<br>H04W64/00 |
| X | EP 2 207 279 A1 (ALCATEL LUCENT [FR]) 14 July 2010 (2010-07-14)<br>* paragraph [0004] - paragraph [0007] *<br>* paragraph [0026] *<br>* paragraph [0031] - paragraph [0038] *<br>* figure 1 * | 1-15 | |
| X | EP 0 856 746 A2 (MATSUSHITA ELECTRIC IND CO LTD [JP]) 5 August 1998 (1998-08-05)<br>* column 1, line 1 - column 2, line 54 *<br>* column 6, line 39 - column 10, line 34 *<br>* figures 1,2 * | 1-15 | |

TECHNICAL FIELDS
SEARCHED (IPC)

H04B
H04W
H04Q

The present search report has been drawn up for all claims

| Place of search | Date of completion of the search | Examiner |
|---|---|---|
| The Hague | 20 July 2011 | Larcinese, Annamaria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 11 29 0117

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

1. claims: 1-8, 13, 15

    A mobile transceiver apparatus adapted for performing
    synchronisation and relative method.
    ---

2. claims: 9-12, 14, 15

    A base station transceiver having means for sending
    information on its geographic location and related method.
    ---

**ANNEX TO THE EUROPEAN SEARCH REPORT**
**ON EUROPEAN PATENT APPLICATION NO.**                    EP 11 29 0117

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2011

| Patent document cited in search report | Publication date | Patent family member(s) | Publication date |
|---|---|---|---|
| US 2005053099 A1 | 10-03-2005 | NONE | |
| EP 2207279 A1 | 14-07-2010 | WO 2010076090 A1 | 08-07-2010 |
| EP 0856746 A2 | 05-08-1998 | CN 1189753 A<br>JP 3260649 B2<br>JP 10221425 A<br>US 6108556 A | 05-08-1998<br>25-02-2002<br>21-08-1998<br>22-08-2000 |

For more details about this annex : see Official Journal of the European Patent Office, No. 12/82